# EUROPEAN PATENT APPLICATION

(11) **EP 1 638 373 A2**
(43) Date of publication of application: **22.03.2006**
(21) Application number: 05108142.0
(22) Date of filing: 06.09.2005
(51) Int. Cl.: H05B 39/04, B60Q 1/14

(54) **Electronic control system for the headlights of a vehicle**

(30) Priority: 15.09.2004 IT MI20041754
(71) Applicant: PIAGGIO & C. S.p.A., 56025 Pontedera (Pisa) (IT)
(72) Inventor: Bellomini, Andrea, 56010, Ghezzano (Pisa) (IT)
(74) Representative: Coppo, Alessandro

(57) **Abstract**

Electronic control system for headlights (4) of a vehicle comprising a control circuit (3) adapted to supply the voltage of a vehicle battery (5) to said headlights and a monitoring and command circuit (2) interposed between said battery and said control circuit, adapted to partialize the supply voltage to said headlights according to the variations in the battery voltage level.

## Description

The present invention relates to an electronic control system for the headlights of a vehicle. In particular, the present invention relates to an electronic control system for headlights on a two-wheeled vehicle, such as motorcycles or mopeds, in particular for low beam headlights.

Furthermore, the present invention is also applicable on three or four-wheeled vehicles.

Vehicle headlights are generally supplied by the battery of the vehicle itself, which is recharged and maintained charged during the running of the motor by means of an appropriate alternator or a dynamo with which it is connected electrically.

Recent legislation in Italy has made it obligatory for all motorcycles and mopeds, to keep their low beam headlights switched on permanently while driving on roads outside urban areas.

In these conditions, the consumption of the electrical energy stored in the battery has become considerable, especially in relation to the low beam headlights.

From an analysis performed on a medium grade motorcycle (capacity 200 cc, four stroke) the Applicant demonstrated that at prolonged minimum speed (approximately 1600 rpm), with the low beam headlights permanently switched on, together with the repeated interventions of the electric radiator fan, the battery tends to run flat.

The Applicant has considered the problem of reducing the absorption of the headlight system on a battery-supplied vehicle, in order to prevent the battery from running flat as a result of low beam headlights being switched on for long periods of time.

The Applicant has realised an electronic control system for headlights on a vehicle that monitors the voltage of the battery, and if the battery drops under a pre-established threshold, provides for a partialization intervention on the low beam light to reduce the absorption according to the variations in the voltage level of the battery.

One aspect of the present invention refers to an electronic control system for vehicle headlights comprising a control circuit adapted to supply the vehicle battery voltage to said headlights, characterised in that it comprises a monitoring and command circuit, interposed between said battery and said control circuit, adapted to partialize the supply voltage to said headlights according to the variations in the battery voltage levels.

The characteristics and advantages of the electronic control system according to the present invention will be made clearer from the following description, provided as an example, but not to be considered as limiting in any manner, with reference to the appended schematic drawings wherein:

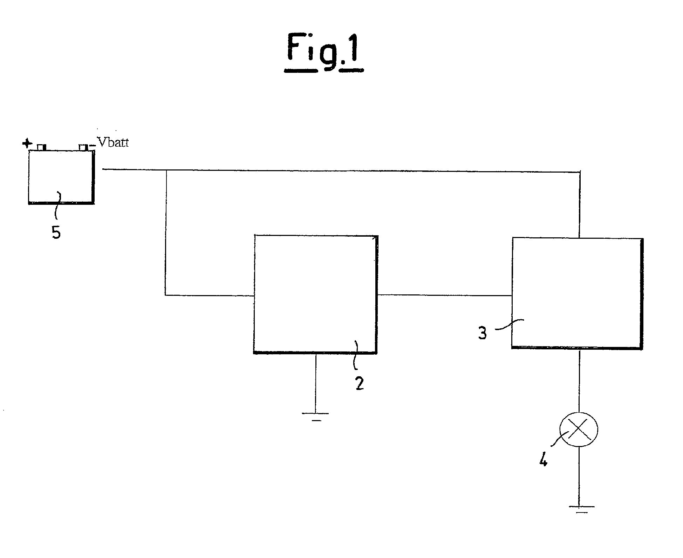

- Figure 1 shows a schematic view of a block diagram of the electronic control system according to the present invention;
- Figure 2 shows an example of the electrical layout diagram embodying the command system shown in figure 1.

In reference to the aforesaid figures, the command system for the vehicle headlights comprises a monitoring and control circuit 2 and a control circuit 3 for the low beam headlights 4 of a vehicle.

The control circuit 3 is an electronic circuit which suitably amplifies an input signal, making it available for output to the low beam headlight requiring electrical supply.

According to the present invention, this command circuit is adapted to partialize the supply voltage to said headlights according to the variations in the battery voltage levels.

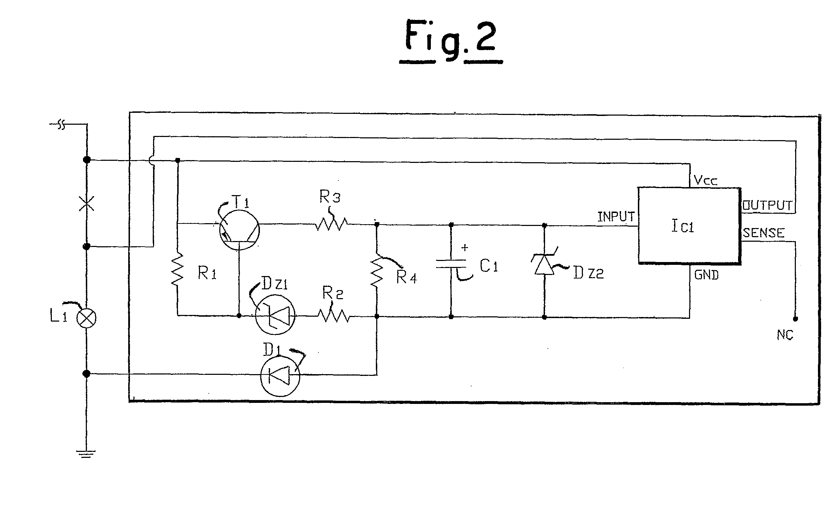

The exemplary embodiment shown in figure 2 uses an IC1 control chip (for example a known chip identified as VN920), which is able to transmit the supply current (OUTPUT) to the low beam headlights according to the supplied input current (INPUT). This control chip is supplied by the vehicle battery. The input current to said control chip is provided by the command signal on exit from the monitoring and control circuit 2, which operates in the following manner.

Said command signal for the control circuit is a signal that varies according to the variation of the supply current from the vehicle battery. Said control is performed by a partialization of the supply voltage of the low beam light by means of pulse width modulation technique (PWM). Basically, the partialization technique foresees the supply of the light by means of voltage having the form of a square wave.

Said wave has a fixed period (frequency) and a percentage (duty cycle) that has a high level in comparison with the period of the square wave, variable between 0% (no supply) and 100% (continuous voltage supply) .

The oscillation frequency of the square wave is selected so that the optical effect of continuing switch-on/switch-off for the human eye is avoided.

The monitoring and control circuit comprises a transistor switch T1, which determines the duty cycle of said command signal that increases, preferably in linear mode according to the voltage supplied by the battery.

A voltage with a higher threshold, and a voltage with a lower threshold, both of which adjustable, are obtained by selecting a suitable value of the calibration resistor R2, and possibly by inserting an additional resistor parallel to resistor R2.

The control circuit operates in the following manner. For battery voltage values under the voltage of said lower threshold, the low beam light will switch off; for values over the voltage of said upper threshold, the low beam light will remain permanently switched on; for battery voltage values in a range between the two thresholds, the low beam light is controlled with a pulse width modulation (PWM) signal with a duty cycle, preferably increasing in linear mode with the battery voltage.

## Claims

1. Electronic control system for headlights (4) of a vehicle comprising a control circuit (3) adapted to supply voltage from a vehicle battery (5) to said headlights, **characterised in that** it comprises A monitoring and command circuit (2), interposed between said battery and said control circuit, adapted to partialize the supply voltage to said headlights according to the variations in the battery voltage levels.

2. Electronic system according to claim 1, wherein said partialization is obtained by means of pulse width modulation of the battery voltage that consists in supplying said headlights with a voltage having a square wave form.

3. Electronic system according to claim 2, wherein said square wave presents a pre-established frequency and a high level duty cycle in relation to the variable square wave period according to the variations of the battery voltage.

4. Electronic system according to claim 1, wherein said command circuit determines said partialization of the supply voltage to said headlights according to the variations of the battery voltage levels which are included between a lower threshold voltage and an upper threshold voltage.

5. Electronic system according to claim 4, wherein said command circuit determines the switching off of the headlights in the case wherein the battery voltage is lower than the value of the said lower threshold voltage.

6. Electronic system according to claim 4, wherein said command circuit determines the permanent switch-on of the headlights in the case wherein the battery voltage is higher than the value of the said upper threshold voltage.

7. Electronic system according to claim 2 wherein said command circuit comprises a transistor switch adapted to determine the forming of the said square wave.

8. Electronic system according to claim 2 wherein the oscillation frequency of the square wave is selected in such a manner that it prevents the optical effect of continuous switch-on/switch-off of the lights for the human eye.

9. Electronic system according to claim 3 wherein said high level duty cycle in relation to the period of the square wave, increases in linear mode according to the increase in the battery voltage.

10. Electronic system according to claim 1 wherein said lights are the low beam headlights of the vehicle.

11. Electronic system according to claim 1 wherein said vehicle is a two-wheeled vehicle.

12. Electronic system according to claim 1 wherein said vehicle is a three-wheeled vehicle.

13. Electronic system according to claim 1 wherein said vehicle is a four-wheeled vehicle.
